# EUROPÄISCHE PATENTSCHRIFT

(11) **EP 0 767 214 B1**
(45) Veröffentlichungstag und Bekanntmachung des Hinweises auf die Patenterteilung: **09.04.2003**
(21) Anmeldenummer: 96111593.8
(22) Anmeldetag: 18.07.1996
(51) Int. Cl.: C08L 61/24, C08K 5/00, C08J 5/24, B32B 27/42, D06N 1/00, D06N 5/00, B01D 39/00, H01M 2/16

(54) **Harnstoff-Formaldehyd-Harz-Bindemittel für die Herstellung von Flächengebilden auf Basis von Fasern**
Urea-formaldehyde resin binders for the preparation of sheet materials based on fibres
Liants à base de résines urée-formaldéhyde pour la préparation de structures planes fibreuses

(30) Priorität: 28.07.1995 DE 19527578; 03.08.1995 DE 19528540
(43) Veröffentlichungstag der Anmeldung: 09.04.1997
(73) Patentinhaber: BASF AKTIENGESELLSCHAFT, 67056 Ludwigshafen (DE)
(72) Erfinder: Pitteroff, Walter, Dr., 67273 Bobenheim (DE); Hummerich, Rainer, Dr., 67551 Worms (DE); Seyffer, Hermann, Dr., 69123 Heidelberg (DE); Reinhard, Stephan, Dr., 67259 Beindersheim (DE)

(56) Entgegenhaltungen:
- EP-A- 0 305 249
- EP-A- 0 410 782
- DE-A- 3 943 215
- GB-A- 1 273 152
- DATABASE WPI Week 7726 Derwent Publications Ltd., London, GB; AN 77-46287y XP002021904 & JP-B-52 020 516 (ELECTRO-CHEMICAL IND. KK) , 3.Juni 1977
- DATABASE WPI Week 9018 Derwent Publications Ltd., London, GB; AN 90-137635 XP002021905 & SU-A-1 514 612 (FIRE FIGHTING RES. INST.; CHERNOVITSE CHEM. WKS) , 15.Oktober 1989

## Beschreibung

Die vorliegende Erfindung betrifft Harzmischungen, enthaltend
(a) 55 bis 98,8 Gew.-% eines Harnstoff-Formaldehyd-Harzes,
(b) 1 bis 20 Gew.-% Melamin,
(c) 1 bis 20 Gew.-% Dicyandiamid und
i (d) 1 bis 30 Gew.-% eines aliphatischen C₂- bis C₄-Alkanols mit mindestens zwei alkoholischen Hydroxylgruppen (Polyol A) oder eines mindestens zwei alkoholische Hydroxylgruppen tragenden Ethers, aufgebaut aus 2 bis 10 von dem Polyol A abgeleiteten Einheiten.

Weiterhin betrifft die Erfindung gebundene Flächengebilde auf Basis von Fasern, die unter Verwendung der Harzmischungen hergestellt wurden sowie die Verwendung der gebundenen Flächengebilde auf Basis von Fasern insbesondere als Inliner für die Herstellung von Fußbodenbelägen und bituminierten Dachbahnen.

Es ist allgemein bekannt, Bitumen oder Kunststoffe in Form von Bahnen oder Folien als Beschichtungsmittel einzusetzen, wobei diese durch Einbettung eines gebundenen Flächengebildes auf Basis von Fasern, beispielsweise einem gebundenen Vliesstoff wie ein mit einem Bindemittel imprägniertes Glasfaser- oder Kunststoffvlies, verstärkt sind. Derartige Bahnen oder Folien werden in Abhängigkeit von der Matrix, d.h. dem Kunststoff bzw. dem Bitumen, in die der gebundene Vliesstoff eingebettet ist, beispielsweise als Dachpappe oder als Fußbodenbelag eingesetzt. Es hat sich gezeigt, daß die Eigenschaften, insbesondere was die mechanischen Eigenschaften derartiger Flächenverbunde angeht, entscheidend von den mechanischen Eigenschaften der gebundenen Vliesstoffe abhängen.

Weiterhin finden gebundene Vliesstoffe auch als Filtermaterialien Verwendung, die zur Filtration von wäßrigen Suspensionen eingesetzt werden. Auch bei diesem Anwendungszweck wird eine hohe mechanische Festigkeit gewünscht. Damit die Filtermaterialien beim Einsatz in wäßriger Umgebung eine lange Lebensdauer aufweisen und eine Verunreinigung des Filtrats möglichst vermieden wird, soll das Bindemittel, auch wenn es für längere Zeit mit Wasser in Kontakt kommt, nicht chemisch abgebaut werden oder sich gar auflösen.

Eine hohe Festigkeit der gebundenen Vliesstoffe, insbesondere unmittelbar nach deren Herstellung, ist auch deshalb erforderlich, weil sie bei ihrer Herstellung und Verarbeitung zu Flächenverbunden z.B. beim Wickeln, Imprägnieren mit dem als Matrix dienenden Material und Trocknen Zug- und Scherkräften ausgesetzt sind. Hierfür ist es erforderlich, daß das Bindemittel möglichst kurze Zeit nach dem Auftragen auf die ungebundenen Flächengebilde auf Basis von Fasern aushärtet und dem Flächengebilde die erforderliche Festigkeit verleiht.

Ferner sollen die Bindemittel möglichst wirtschaftlich herstellbar und zu gebundenen Vliesstoffen verarbeitbar sein. Dies erfordert beispielsweise, daß die Bindemittel lagerbar sind, ohne daß sie ihre Eigenschaften verändern und daß sie sich ohne besondere Vorkehrungen im Hinblick auf die Arbeitshygiene und die Arbeitssicherheit verarbeiten lassen. Hierbei ist es besonders wichtig, daß beim Imprägnieren der Vliesstoffe und beim anschließenden Trocknen möglichst wenig Stoffe freigesetzt werden, die nicht oder nur in eingeschränktem Umfang in die Atmosphäre abgegeben werden dürfen, wie organische Lösungsmittel oder Formaldehyd. Aus diesem Grund sollen sich die Bindemittel in Form von wäßrigen Lösungen verarbeiten lassen.

Diese wäßrigen Lösungen sollen sich möglichst unbegrenzt mit Wasser verdünnen lassen und dabei in eine Lösung oder Dispersion übergehen, die weitgehend frei von klebrigem Koagulat ist. Diese Eigenschaft erleichtert die Reinigung von Gegenständen, mit denen die wäßrigen Lösungen bei ihrem Transport oder ihrer Verarbeitung in Kontakt kommen, erheblich.

In der DE-A-3 346 679 werden wäßrige Harnstoff-Formaldehyd-Harze, in die ein Alkalkisulfit mit einkondensiert ist und deren Methylolgruppen mit Alkanolen verethert sind, als Bindemittel für Vliesstoffe empfohlen. Diese Bindemittel enthalten jedoch noch relativ große Mengen an freiem Formaldeyhd, von dem bei der Verarbeitung der Harze zu Flächenverbunden beträchtliche Mengen freigesetzt werden.

Aus der US-A-3 864 296 sind wäßrige Bindemittellösungen und deren Verwendung für die Imprägnierung von Cellulosegeweben, z.B. Papier, bekannt. Diese Bindemittellösungen enthalten beispielsweise das Umsetzungsprodukt aus einer mehrwertigen Carbonsäure, die eine C=C-Doppelbindung enthält und einem mehrwertigen Alkylamin, das anschließend mit einem kationischen Harnstoff-Formaldehyd-Harz weiter umgesetzt wird. Zur Erniedrigung der Viskosität werden diese Bindemittel gegebenenfalls mit einem mehrwertigen Alkohol, z.B. Diethylen- oder Triethylenglykol versetzt.

Die EP-A-410 782 beschreibt Melamin enthaltende Harnstoff-Fomialdehyd-Harze.

Aus der DE-A-3 943 215 sind Melamin-Formaldehyd-Harze bekannt, die Dicyandiamid und Ethylenglykol enthalten.

Aufgabe der vorliegenden Erfindung war daher, ein Bindemittel für die Herstellung von gebundenen Flächengebilden auf Basis von Fasern, die das gewünschte Eigenschaftsprofil aufweisen, bereitzustellen. Insbesondere sollte es sich hierzu als wäßrige Lösung unter Vermeidung von hohen Formaldehydemissionen verarbeiten lassen.

Demgemäß wurden die eingangs definierten Harzmischungen und die aus ihnen hergestellten gebundenen aus Fasern aufgebauten Flächengebilde gefunden.

Die erfindungsgemäßen Harzmischungen enthalten
a) 55 bis 98,8 bevorzugt 65 bis 97,3 besonders bevorzugt 75 bis 95,7 Gew.-% eines Harnstoff-Formaldehyd-Harzes,
b) 0,1 bis 20, bevorzugt 0,2 bis 15, besonders bevorzugt 0,3 bis 7 Gew.-% Melamin,
c) 0,1 bis 20, bevorzugt 0,5 bis 15, besonders bevorzugt 1 bis 8 Gew.-% Dicyandiamid und
d) 1 bis 30, bevorzugt 2 bis 20, besonders bevorzugt 3 bis 15 Gew.-% eines aliphatischen C₂- bis C₄-Alkanols mit mindestens zwei alkoholischen Hydroxylgruppen (Polyol A) oder eines mindestens zwei alkoholische Hydroxylgruppen tragenden Ethers, aufgebaut aus 2 bis 10 von dem Polyol A abgeleiteten Einheiten.

Die Harnstoff-Formaldehyd-Harze sowie deren Herstellung sind allgemein bekannt und beispielsweise in Ullmanns Encyklopädie der technischen Chemie, 4. Auflage, Verlag Chemie GmbH, Weinheim/Bergstraße, 1973, Band 7, S. 403 bis 422, beschrieben.

Geeignete Harnstoff-Formaldehyd-Harze erhält man beispielsweise, indem man
a1) pro Mol Harnstoff
a2) 0,5 bis 2,5 mol, besonders bevorzugt 1,2 bis 1,9 mol Formaldehyd umsetzt.

Bevorzugt wird die Komponente (a1) (Harnstoff) in Form einer konzentrierten wäßrigen Lösung mit Formaldehyd, die aus der DE-A 24 51 990 und der EP-A 0 083 427 bekannt ist, eingesetzt. Diese Lösungen aus 2,0 bis 6,0, bevorzugt 3,5 bis 4,5 mol Formaldehyd pro Mol Harnstoff haben bevorzugt einen Feststoffgehalt von 50 bis 85, bevorzugt von 60 bis 80 Gew.-%. Sie enthalten Harnstoff und Formaldehyd teils in monomerer Form, teils in Form von Umsetzungsprodukten wie Methylolharnstoffen oder niedermolekularen Kondensationsprodukten.

Der Formaldehyd (Komponente a2) wird bevorzugt, wie zuvor beschrieben, in Form der konzentrierten wäßrigen Lösung mit Harnstoff, als 30 bis 50 gew.-%ige wäßrige Lösung oder als Paraformaldehyd eingesetzt.

Die Herstellung der Komponente (a) nimmt man im allgemeinen so vor, daß man zuerst die Komponenten (a1) und (a2) in einer wäßrigen Lösung bei 60 bis 100, bevorzugt von 75 bis 95°C und einem pH-Wert von 4,5 bis 7,5 reagieren läßt. Um die Reaktion zu beenden, läßt man die Lösung abkühlen, bis sie eine Temperatur von 10 bis 80, bevorzugt von 10 bis 30°C erreicht hat.

Dabei wird die Umsetzung im allgemeinen bei pH-Werten, die im oberen Drittel des angegebenen pH-Bereiches liegen, begonnen und im Verlauf der Reaktion schrittweise auf einen pH-Wert, der im unteren Drittel des angegebenen Bereichs liegt, abgesenkt.

Im allgemeinen führt man die Umsetzung so lange durch, bis das dabei entstandene Harnstoff-Formaldehydharz (Komponente a), bezogen auf einen Feststoffgehalt von 60 Gew.-%, eine Viskosität von 30 bis 100, bevorzugt 40 bis 70 mPa·s aufweist.

Üblicherweise wird die Komponente (a) als wäßrige Lösung mit einem Feststoffgehalt von 30 bis 70, bevorzugt 55 bis 60 Gew.-% eingesetzt. Lösungen der Komponente (a) mit derartigen Feststoffgehalten lassen sich besonders einfach herstellen, wenn bereits bei der Umsetzung der Komponenten (a1) und (a2) entsprechende Mengen an Wasser mit eingesetzt werden. Es ist jedoch gleichfalls möglich, den Feststoffgehalt der Lösungen nachträglich einzustellen, indem man nachträglich Wasser hinzufügt oder bevorzugt durch Destillation bei verminderten Druck und einer Temperatur von 15 bis 30°C Wasser entfernt.

Erfindungsgemäße Mischungen mit einem besonders hohen Eigenschaftsniveau erhält man vor allem dann, wenn man die Umsetzung in 4 Schritten durchführt.

In Schritt 1 werden die Komponenten (a2) und (a1) zunächst im Molverhältnis 4:1 bis 5:1 bei einem pH-Wert von 6,5 bis 7,5 miteinander umgesetzt, bis ein Umsetzungsprodukt entstanden ist, das, bezogen auf einen Feststoffgehalt von 45 bis 55 %, eine im Fordbecher ermittelte Auslaufzeit von 45 bis 65 sec. aufweist. Es wird angenommen, daß in diesem Schritt vor allem methylolierter Harnstoff gebildet wird.

In Schritt 2 wird das in Schritt 1 erhaltene Umsetzungsprodukt bei einem pH-Wert von 4,5 bis 5,5 weiter umgesetzt, bis die im Fordbecher ermittelte Auslaufzeit, bezogen auf einen Feststoffgehalt von 45 bis 55 %, 5 bis 65 sec. erreicht hat. Vermutlich bildet in diesem Schritt der methylolierte Harnstoff höhermolekulare Oligomere, die im Mittel 2 bis 5 vom Harnstoff abgeleitete Einheiten enthalten.

In Schritt 3 wird das in Schritt 2 erhaltene Umsetzungsprodukt üblicherweise bei einem pH-Wert von 7,0 bis 7,5 mit soviel Formaldehyd versetzt, daß das Verhältnis Komponente (a2):(a1) 3,0:1 bis 5,0:1, bevorzugt 3,0:1 bis 3,5:1 beträgt.

In Schritt 4 wird das in Schritt 3 erhaltene Umsetzungsprodukt mit solchen Mengen Harnstoff versetzt, daß das Molverhältnis (a2):(a1) 2,5:1 bis 0,5:1, bevorzugt 1,9:1 bis 1,2:1 beträgt. Bevorzugt wird der pH-Wert vor der Zugabe des Harnstoffs auf einen Wert von 5,0 bis 6,0 abgesenkt und während der Zugabe des Harnstoffs kontinuierlich oder in mehreren Schritten wieder auf einen Wert von 7,5 bis 8,5 eingestellt.

Üblicherweise beträgt die Verweilzeit bei Schritt 1 15 bis 25 min bei einer Temperatur von 75 bis 95°C. Schritt 2 wird im allgemeinen bei einer um ca. 5°C höheren Temperatur als Schritt 1 durchgeführt. Bei Verweilzeiten von 20 bis 50 min sind meistens Temperaturen von 80 bis 100°C erforderlich. Nach der Zugabe von Formaldehyd in Schritt 3 wird die Umsetzung üblicherweise noch für 20 bis 40 min bei einer Temperatur von 80 bis 95°C fortgesetzt. In Schritt 4 wird die Reaktionsmischung vor der Zugabe des Harnstoffs auf 40 bis 60°C erniedrigt, wonach dieses besonders bevorzugte Herstellverfahren durch Abkühlung auf Temperaturen von 10 bis 30°C abgeschlossen wird.

Zur Einstellung der pH-Werte können die allgemein üblichen Basen wie Alkali- oder Erdalkalihydroxide, bevorzugt in Form ihrer wäßrigen Lösungen sowie tertiäre Amine, z.B. Tri-(C₁- bis C₆-Alkyl)-amine und Säuren wie Mineralsäuren, z.B. Salzsäure, Schwefelsäure und Phosphorsäure oder organische Säuren, z.B. Carbonsäuren wie Ameisensäure eingesetzt werden.

Die Komponenten (b) und (c) Melamin und Dicyandiamid werden bevorzugt in fester Form eingesetzt.

Als Komponente (d) werden bevorzugt Glycerin oder eine Verbindung der allgemeinen Formel I 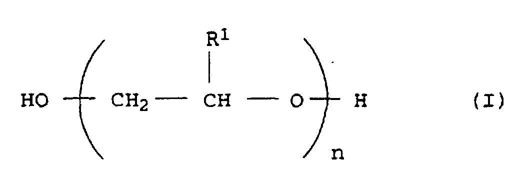 in der
- R¹: Wasserstoff oder Methyl und
- n: 1 bis 10, bevorzugt 1 bis 4 bedeutet.

Falls R¹ in der Verbindung der Formel (I) mehrfach vorkommt, können Reste R¹ mit verschiedener Bedeutung auch nebeneinander vorliegen.

Unter den Verbindungen der allgemeinen Formel I sind vor allem Ethylenglykol, Propylenglykol, Diethylenglykol, Triethylenglykol und Tetraethylenglykol bevorzugt.

Die erfindungsgemäßen Harzmischungen werden im allgemeinen durch Vermischung der Komponenten (a) bis (d) hergestellt. Das Vermischen ist unkritisch und erfolgt beispielsweise, indem man die Komponenten (b), (c) und (d) in das Harnstoff-Formaldehyd-Harz einrührt.

Die Vermischung der Komponenten (a) bis (d) kann zu einem beliebigen Zeitpunkt erfolgen, also beispielsweise unmittelbar vor der Verarbeitung der erfindungsgemäßen Mischungen. Bevorzugt nimmt man die Vermischung unmittelbar nach der Herstellung des Harnstoff-Formaldehyd-Harzes vor, beispielsweise während man das Harnstoff-Formaldehyd-Harz von den bei der Herstellung üblichen Temperaturen auf tiefere Temperaturen abkühlt, also z.B. bei 40 bis 60°C.

Die auf diese weise erhaltenen erfindungsgemäßen Harzmischungen sind bereits in dieser Form handelsfähig und über einen Zeitraum von ca. 1 bis 2 Monate bei ca. 20°C lagerbar, ohne ihre Eigenschaften wesentlich zu verändern. Zur Erhöhung der Lagerstabilität und zur Verringerung der Transportkosten können diese wäßrigen Harzmischungen mit Vorteil auch in die Pulverform überführt werden. Hierzu eignen sich besonders die allgemein bekannten Sprühtrocknungsverfahren.

Die erfindungsgemäßen Harzmischungen werden zweckmäßiger in Form einer wäßrigen Imprägnierflotte mit einem Gehalt von 15 bis 60, bevorzugt von 15 bis 30 Gew.-% an der erfindungsgemäßen Harzmischung verarbeitet.

Hierzu werden Flächengebilde auf Basis von Fasern mit diesen Imprägnierflotten imprägniert und anschließend das Wasser teilweise oder vollständig entfernt, wobei sich die in der Imprägnierflotte enthaltene erfindungsgemäße Mischung verfestigt und gebundene Flächengebilde auf Basis von Fasern entstehen.

Um die Verfestigung der Flächengebilde zu beschleunigen, setzt man den Imprägnierflotten zweckmäßigerweise saure Katalysatoren, z.B. Metallsalze starker Säuren wie Magnesiumchlorid oder Säuren, vorzugsweise Mineralsäuren, z.B. Phosphorsäure zu. weiterhin kann es vorteilhaft sein, den Imprägnierflotten übliche Hilfsmittel wie Netzmittel, Farbmittel, Verdicker, Weichmacher, Hydrophobiermittel, Aufheller, Konservierungsmittel, Entschäumer, Emulgatoren oder Haftvermittler zuzusetzen.

Geeignete Flächengebilde auf Basis von Fasern können aus Fasern unterschiedlichster Art aufgebaut sein. Aus Fasern aufgebaute Flächengebilde sind beispielsweise Matten oder Vliese aus Materialien wie Cellulose, Glasfasern, Mineralfasern Polyesterfasern, Keramikfasern sowie Papier und ganz allgemein Textilien.

Die Flächengewichte der Flächengebilde auf Basis von Fasern liegen im allgemeinen bei 20 bis 500 g/m².

Die Imprägnierung erfolgt im allgemeinen durch Aufsprühen oder Aufrakeln der Imprägnierflotte oder durch Tauchen der Flächengebilde auf Basis von Fasern in die Imprägnierflotte. Gegebenenfalls kann ein Überschuß an Imprägnierflotte anschließend abgequetscht oder abgesaugt werden.

Üblicherweise werden die Auftragsmengen der Imprägnierflotte so gewählt, daß sich der Feststoffgehalt der Flächengebilde auf Basis von Fasern nach der Imprägnierung und der Entfernung des Wassers um 10 bis 30, bevorzugt um 15 bis 25 % erhöht hat.

Besonders bevorzugt wird die Imprägnierung in einem Horizontalfoulard vorgenommen.

Zur Entfernung des Wassers werden die imprägnierten Materialien bei erhöhter Temperatur, vorzugsweise bei Temperaturen von 100 bis 400, insbesondere von 130 bis 280°C über einen Zeitraum von vorzugsweise 2 bis 10 min getrocknet. Bei diesen Temperaturen entsteht aus den Komponenten der erfindungsgemäßen Mischungen ein hochmolekulares Netzwerk, durch das die Fasern fest miteinander verbunden werden.

Diese gebundenen Flächengebilde auf Basis von Fasern weisen sowohl in nassem wie in trockenem Zustand eine wesentlich höhere Reiß- und Zugfestigkeit auf. Dabei bleibt die Flexibilität der Materialien weitgehend erhalten, d.h. die gebundenen Flächengebilde auf Basis von Fasern lassen sich knicken oder rollen.

Die gebundenen Flächengebilde auf Basis von Fasern lassen sich besonders einfach und wirtschaftlich herstellen, weil bei der Verarbeitung der Imprägnierflotten kaum Formaldehyd freigesetzt wird und sich deshalb spezielle Maßnahmen zur Luftreinhaltung, z.B. Behandlung der zum Trocknen der imprägnierten verwendeten heißen Luft, erübrigen. Ferner lassen sich Teile, die mit den Imprägnierflotten in Kontakt kommen, leicht mit Wasser reinigen, weil sie sich mit Wasser verdünnen lassen, ohne daß dabei klebriges Koagulat gebildet wird. Weiterhin zeichnen sich die Imprägnierflotten durch eine besonders hohe Reaktivität aus. Der Vorteil, der damit verbunden ist, besteht darin, daß die Harzmischungen nach ihrem Auftrag auf das Flächengebilde auf Basis von Fasern und dem Trocknen rasch aushärten, so daß die so hergestellten gebundenen aus Fasern aufgebauten Flächengebilde bereits kurze Zeit nach deren Herstellung eine hohe Reißfestigkeit aufweisen, wodurch ihre Weiterverarbeitung vereinfacht wird.

Üblicherweise werden die gebundenen Flächengebilde auf Basis von Fasern zu Flächenverbunden wie Bahnen oder Folien weiterverarbeitet, indem man sie in einer oder in mehreren Lagen übereinander als Inliner in eine Matrix aus Kunststoff oder Bitumen einbettet.

Derartige Flächenverbunde können beispielsweise als Beschichtungsmaterialien, z.B. as Fußbodenbelag oder Dachpappe Verwendung finden.

Weiterhin können die gebundenen Flächengebilde auf Basis von Fasern auch als Filtermaterial oder als Separatoren in Batterien eingesetzt werden.

### Herstellungsbeispiele

### Harzmischung 1

Eine Mischung aus 750 g Formol 50 (wäßrige Lösung aus Wasser, Harnstoff und Formaldehyd (entspricht 188 g Harnstoff und 375 g Formaldehyd)) und 240 g einer 68 gew.-%igen wäßrigen Harnstofflösung wurde bei ca. 85°C und einem pH-Wert von ca. 7,0 20 min umgesetzt. Anschließend wurde der pH-Wert auf ca. 5,0 abgesenkt und die Umsetzung bei einer Temperatur von ca. 90°C fortgesetzt, bis die Rektionsmischung eine im Fordbecher bestimmten Auslaufzeit von 55 s aufwies. Danach wurden unter Beibehaltung der letztgenannten Temperatur 379 g einer 40 gew.-%igen wäßrigen Formaldehydlösung zugesetzt. Anschließend wurde die Mischung auf ca. 60°C abgekühlt, und mit 102 g Harnstoff versetzt und der pH-Wert der Mischung mit Ameisensäure auf 5,5 eingestellt. Nach einer Verweilzeit von 30 min unter diesen Bedingungen wurden der Mischung weitere 102 g Harnstoff zugesetzt und der pH-Wert auf 7,0 erhöht. Nach weiteren 30 min wurden als Komponenten (b), (c) und (d) 8 g Melamin, 17 g Dicyandiamid und 33 g Diethylenglykol zugegeben. Nach dem Auflösen der drei zuletzt zugegebenen Stoffe, was maximal 20 min dauert, wurde der pH-Wert der Mischung auf ca. 8,0 eingestellt und die Mischung nach Filtration auf ca. 20°C abgekühlt, wobei die genannten Operationen, die nach der Zugabe der Komponenten (b) bis (d) erfolgten, so rasch durchgeführt wurden, daß sie innerhalb von 20 min beendet waren. Die Ausbeute betrug ca. 1.660 g.

### Harzmischung 2

Eine Mischung aus 700 g einer 40 gew.-%igen Formaldehydlösung und 262 g Harnstoff wurde bei einem pH-Wert von ca. 7,0 20 min umgesetzt. Anschließend wurde der pH-Wert auf ca. 5,0 abgesenkt und die Umsetzung bei einer Temperatur von ca. 90° fortgesetzt, bis die Reaktionsmischung eine im Fordbecher bestimmte Auslaufzeit von 16 s⁻¹ aufwies. Danach wurden unter Beibehaltung der letztgenannten Temperatur 283 g einer 40 gew.-%igen wäßrigen Formaldehydlösung zugesetzt. Anschließend wurde die Mischung auf ca. 60°C abgekühlt, und mit 196 g Harnstoff versetzt und der pH-Wert der Mischung mit Ameisensäure auf 5,5 eingestellt. Nach einer Verweilzeit von 30 min unter diesen Bedingungen wurden der Mischung als Komponenten (b), (c) und (d) 95 g Melamin, 95 g Dicyandiamid und 76 g Diethlenglykol zugegeben. Die Herstellung der Harzmischung wurde auf die gleiche Weise wie bei der Herstellung der Harzmischung 1 beschrieben, beendet.

### Harzmischung 3

Die Harzmischung wurde wie in Beispiel 3 der DE-A-33 46 679 beschrieben hergestellt.

### Harzmischung 4

Handelsübliches Harnstoff-Formaldehyd-Harz (Ureccoll® 181, BASF AG), das vom Hersteller als Bindemittel für Vliesstoffe empfohlen wird.

### Harzmischung 5

Handelsübliches Harnstoff-Formaldehyd-Harz (Urecoll® 141, BASF AG), das vom Hersteller als Bindemittel für Vliesstoffe empfohlen wird.

Die Eigenschaften der Harzmischungen (HM) sind in der Tabelle 1 wiedergegeben.

**Tabelle 1**

| | HM 1 | HM 2 | HM 3 | HM 4 | HM 5 |
|---|---|---|---|---|---|
| pH-Wert | 7,7 | 7,3 | 7,7 | 9,0 | 8,3 |
| Feststoffgehalt [%] | 57,8 | 57,9 | 56,8 | 79,5 | 59,9 |
| Viskosität [mPa·s] | 22 | 55 | 188 | 4980 | 740 |
| Wasserverdünnbarkeit | 2 Wochen | 3 Wochen | 1 Woche | sofort | 2 Wochen |
| Reaktivität [min] | 12 | 10 | 25 | 10 | 60 |
| freier Formaldehyd [%] | 0,1 | 1,5 | 1,3 | 2,9 | 2,6 |
| Formaldehydemission | 17 | 63 | 90 | 98 | 92 |

### Anwendungstechnische Eigenschaften der Harzmischungen

### Wasserverdünnbarkeit

Die Wasserverdünnbarkeit wurde an den Harzmischungen unmittelbar nach deren Herstellung (sofort) sowie nach 1-, 2- und 3-wöchiger Lagerung bei einer Temperatur von 20°C untersucht. Nach den jeweiligen Zeiträumen wurde eine Probe der Harzmischungen mit Wasser auf einen Feststoffgehalt von 20 % verdünnt und 4 h stehengelassen. Danach wurde visuell beurteilt, ob sich ein Bodensatz gebildet hatte. In Tabelle 1 ist der früheste Zeitpunkt angegeben, bei dem der Bodensatz auftrat.

### Reaktivität

Die Harzmischungen wurden durch Zugabe von Phosphorsäure auf einen pH-Wert von 5,0 eingestellt. Es wurde die Zeit, die nach der Zugabe der Phosphorsäure bis zur Gelierung der Lösung vergeht, ermittelt, wobei die Gelierung an einem sprunghaften Viskositätsanstieg erkennbar ist. Je kürzer diese Zeitspanne (Gelierzeit) ist, desto höher ist die Reaktivität der Harzmischungen.

### Feststoffgehalt

Der Feststoffgehalt der wäßrigen Lösungen der Harzmischungen und der Melamin-Formaldehyd-Harze (Komponente a) wurde durch Rückwiegen einer Probe von 1 g, die 2 h bei 120°C getrocknet wurde (Bestimmung in Anlehnung an DIN 53216 bzw. ISO/DIN 3251) ermittelt.

Die Erhöhung des Feststoffgehaltes des mit der Harzmischung imprägnierten aus Fasern aufgebauten Flächengebildes gegenüber dem hierfür eingesetzten Flächengebilde vor der Imprägnierung wurde ermittelt, indem das noch nicht-imprägnierte Flächengebilde gewogen, imprägniert und anschließend 2 min bei 180°C in einem Mathis-Ofen getrocknet und erneut gewogen wurde. Aus der Gewichtsdifferenz wurde die prozentuale Erhöhung des Feststoffgehaltes berechnet.

### Viskosität

Die mit der Dimension mPa·s angegebenen Viskositätswerte wurden mit einem Ubbelohde-Viskosimeter mit einer Kapillare III bei einer Temperatur von 23°C ermittelt, wobei ansonsten die in der DIN 51562, Jan. 1989, Mai 1985, Entwurf Aug. 1986, Meßbedingungen beachtet wurden. Die erhaltenen Werte für die kinematische Viskosität (Dimension:mm²/s) wurde mit der Dichte in die dynamische Viskosität (Dimension mPa·s) umgerechnet. Die Dichtebestimmung erfolgte dabei nach der DIN 53277 (Teil 5).

Die Viskositäten, die als Auslaufzeit aus einem Fordbecher IV bestimmt wurden, beziehen sich auf Messungen nach den Vorschriften der DIN ISO 2431.

### Freier Formaldehyd-Gehalt

Der Gehalt an freiem Formaldehyd wurde nach de Jong bestimmt, wie es in Z. Anal. Chem. Band 281 von 1876, Seite 17 bis 21, beschrieben ist. Dabei wird der freie Formaldehyd unter schwach alkalischen Reaktionsbedingungen mit einer Sulfitmenge, die größer als die Formaldehydmenge ist, umgesetzt, wobei ein Addukt aus Formaldehyd und Sulfit gebildet wird. Anschließend wird das überschüssige Sulfit bei schwach saurem pH titriert, danach das gebildete Sulfit-Formaldehyd-Addukt hydrolysiert und das dabei wieder freigesetzte Sulfit durch Titration mit Iod bestimmt.

### Formaldeyhd-Emission

Ein handelsübliches Polyestervlies mit einem Flächengewicht von ca. 150 g/m² wurde mit einer definierten Menge einer 20 gew.-%igen wäßrigen Lösung der jeweiligen Harzmischung mit einem 2-Walzenpoulard imprägniert.

Das imprägnierte Polyestervlies wurde in einem Ofen 15 min mit einem 180°C heißen Luftstrom getrocknet. Die zur Trocknung verwendete Luft wurde durch wassergefüllte Waschflaschen geleitet, um die an die Luft abgegebene Formaldehydmenge zu absorbieren. Die Formaldehydmenge wurde anschließend kalorimetrisch mit Methylaceton an die Japanese Law Method 112 ermittelt. Der so bestimmte emittierte Formaldehydgehalt wird angegeben in mg Formaldehyd pro Gramm der auf das Polyestervlies aufgetragene Harzmischung.

### Anwendungstechnische Eigenschaften der mit den Harzmischungen hergestellten gebundenen Vliesstoffe

### Herstellung der gebundenen Vliesstoffe

30 cm x 26 cm große Glas-Naßvliese mit einem Flächengewicht von 50 g/m² wurden in Längsrichtung über ein Endlos-PES-Siebband durch eine Bindemittelflotte mit einem Feststoffgehalt von 20 % (eine mit Wasser verdünnte Lösung der jeweiligen Harzmischung) und danach über eine Absaugvorrichtung geführt. Mit Hilfe der Absaugvorrichtung wurde die Menge an aufgetragener Bindemittelflotte auf ca. 100 Gew.-%, bezogen auf das verwendete Glas-Naßvlies eingestellt (entspricht einem Trockenauftrag von ca. 20 Gew.-%). Das imprägnierte Vlies wurde 2 min bei 180°C auf PES-Store als Träger in einem Mathis-Trockner getrocknet.

Aus den so hergestellten gebundenen Vliesstoffen wurden Prüfkörper (A) einer Größe von 240x50 mm und Prüfkörper (B) einer Größe 180x50 mm ausgestanzt. Die jeweils kurzen Enden der Prüflinge wurden mit 3 cm breitem Kreppapier beidseitig beklebt. Falls im Vlies eine Faserorientierung erkennbar war, wurden sowohl Prüflinge hergestellt und geprüft, in denen die Fasern parallel zur langen Seite des Prüflings lagen als auch solche, in denen die Fasern senkrecht zur langen Seite des Prüflings lagen und die' resultierenden Prüfungsergebnisse gemittelt.

Die Prüflinge wurden auf ihre Reißfestigkeit untersucht. Hierzu wurden sie in einer Zugprüfmaschine an den kurzen Enden so eingespannt, daß der Abstand zwischen den fixierten Enden 200 mm (Prüfling A) bzw. 140 mm (Prüfling B) betrug. Die Prüflinge wurden mit einer Abzugsgeschwindigkeit von 25 mm/min bis zum Reißen gedehnt. Die hierfür erforderliche maximale Kraft wurde ermittelt und ist in N in Tabelle 2 angegeben.

### Trockenfestigkeit

Die Prüflinge (a) wurden wie beschrieben vorbereitet und bei Raumtemperatur gedehnt.

### Naßfestigkeit I

Die Prüflinge (A) wurden vor der Prüfung 15 min in 0,1 gew.-%iger wäßriger Lösung eines üblichen Netzmittels (Nekal BX-Lösung) gelagert und anschließend bei Raumtemperatur gedehnt.

### 180°C-Festigkeit

Vorgehensweise wie bei der Messung der Trockenfestigkeit, jedoch erfolgte die Messung in einer Klimakammer bei 180°C.

### Naßfestigkeit II

Unmittelbar vor der Messung, die wie bei der Messung der Trockenfestigkeit erfolgte, wurden die Prüflinge 15 min in 80°C heißem destillierten Wasser gelagert.

### Kochverlust

Die Prüflinge wurden 10 min bei 110°C getrocknet, gewogen und anschließend 10 min in 100°C heißem Wasser gelagert. Danach wurden die Prüflinge 1 h bei 110°C getrocknet und wieder gewogen. Der in % angegebene Gewichtsverlust des Prüflings ist der Kochverlust.

Die Prüfungsergebnisse der mit den jeweiligen Harzmischungen hergestellten Vliese sind in Tabelle 2 wiedergegeben.

**Tabelle 2**

| | HM 1 | HM 2 | HM 3 | HM 4 | HM 5 |
|---|---|---|---|---|---|
| Trockenfestigkeit [N] | 186 | 179 | 184 | 210 | 198 |
| Naßfestigkeit I [N] | 177 | 151 | 112 | 150 | 159 |
| Naßfestigkeit II [N] | 78 | 107 | 46 | 79 | 91 |
| 180°C-Festigkeit [N] | 166 | 121 | 156 | 155 | 143 |
| Kochverlust [%] | 4,5 | 3,8 | 17,5 | 1,3 | 3,6 |

## Patentansprüche

1. Harzmischungen, enthaltend
(a) 55 bis 98,8 Gew.-% eines Harnstoff-Formaldehyd-Harzes,
(b) 0,1 bis 20 Gew.-% Melamin,
(c) 0,1 bis 20 Gew.-% Dicyandiamid und
(d) 1 bis 30 Gew.-% eines aliphatischen C₂- bis C₄-Alkanols mit mindestens zwei alkoholischen Hydroxylgruppen (Polyol A) oder eines mindestens zwei alkoholische Hydroxylgruppen tragenden Ethers, aufgebaut aus 2 bis 10 von dem Polyol A abgeleiteten Einheiten.

2. Harzmischungen nach Anspruch 1, enthaltend als Komponente (a) ein Harnstoff-Formaldehyd-Harz aus
(a1) Harnstoff und
(a2) 0,5 bis 2,5 mol Formaldehyd pro Mol Harnstoff.

3. Harzmischungen nach Anspruch 1 oder 2, enthaltend als Komponente (a) ein Harnstoff-Formaldehyd-Harz, das, bezogen auf eine 60 gew.-%ige wäßrige Lösung, eine Viskosität von 30 bis 100 mPa·s aufweist.

4. Harzmischungen nach den Ansprüchen 1 bis 4, enthaltend als Komponente (d) Glycerin oder eine Verbindung der allgemeinen Formel I 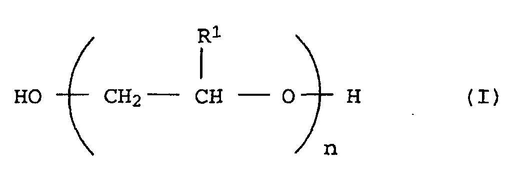 in der
R¹ Wasserstoff oder Methyl und
n 1 bis 10 bedeutet.

5. Wäßrige Lösungen, enthaltend 15 bis 60 Gew.-% der Harzmischungen nach den Ansprüchen 1 bis 4.

6. Verfahren zur Herstellung von gebundenen Flächengebilden auf Basis von Fasern, **dadurch gekennzeichnet, daß** man ein Flächengebilde auf Basis von Fasern mit der wäßrigen Lösung nach Anspruch 5 imprägniert und das Wasser anschließend entfernt.

7. Verfahren nach Anspruch 6, **dadurch gekennzeichnet, daß** es sich um ein aus Glasfasern, Mineralfasern, Polyesterfasern, Keramikfasern oder Cellulosefasern aufgebautes Flächengebilde handelt.

8. Verfahren nach Anspruch 6 oder 7, **dadurch gekennzeichnet, daß** man das Flächengebilde auf Basis von Fasern mit einer solchen Menge der wäßrigen Lösung nach Anspruch 5 imprägniert, daß sich der Feststoffgehalt des gebundenen gegenüber dem Flächengebilde auf Basis von Fasern vor der Imprägnierung um 10 bis 30 % erhöht.

9. Gebundene Flächengebilde auf Basis von Fasern, erhältlich nach den Ansprüchen 6 bis 8.

10. Verwendung von Flächengebilden auf Basis von Fasern nach Anspruch 9 als Inliner in bituminierten Dachbahnen und Bodenbelägen, als Filtermaterial oder als Batterieseparatoren.

## Claims

1. Resin mixtures containing
(a) 55% to 98.8% by weight of a urea-formaldehyde resin,
(b) 0.1% to 20% by weight of melamine,
(c) 0.1% to 20% by weight of dicyandiamide, and
(d) 1% to 30% by weight of an aliphatic C₂- to C₄-alkanol having at least two alcoholic hydroxyl groups (polyol A) or of an ether which bears at least two alcoholic hydroxyl groups and is constructed of 2 to 10 units derived from the polyol A.

2. Resin mixtures as claimed in claim 1, containing as component (a) a urea-formaldehyde resin formed from
(a1) urea and
(a2) 0.5 to 2.5 mol of formaldehyde per mole of urea.

3. Resin mixtures as claimed in claim 1 or 2, containing as component (a) a urea-formaldehyde resin which, based on a 60% by weight aqueous solution, has a viscosity of 30 to 100 mPa·s.

4. Resin mixtures as claimed in any of claims 1 to 4, containing as component (d) glycerol or a compound of the general formula I 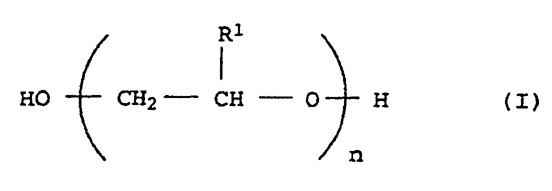 where
R¹ is hydrogen or methyl, and
n is from 1 to 10.

5. Aqueous solutions containing 15% to 60% by weight of the resin mixtures of any of claims 1 to 4.

6. A process for producing bonded fibrous sheet materials, **characterized in that** a fibrous sheet material is impregnated with the aqueous solution of claim 5 and the water is subsequently removed.

7. A process as claimed in claim 6, **characterized in that** the sheet material is based on glass fibers, mineral fibers, polyester fibers, ceramic fibers or cellulose fibers.

8. A process as claimed in claim 6 or 7, **characterized in that** the fibrous sheet material is impregnated with such an amount of the aqueous solution of claim 5 that the solids content of the bonded fibrous sheet material compared with the fibrous sheet material prior to impregnation increases by 10% to 30%.

9. Bonded fibrous sheet materials obtainable as claimed in any of claims 6 to 8.

10. The use of fibrous sheet materials as claimed in claim 9 as an inliner in bituminized roofing membranes and floorcoverings, as a filter material or as battery separators.

## Revendications

1. Mélanges de résines, contenant :
(a) 55 à 98,8 % en poids d'une résine urée-formaldéhyde
(b) 0,1 à 20 % en poids de mélamine,
(c) 0,1 à 20 % en poids de dicyanodiamide et
(d) 1 à 30 % en poids d'un alcanol en C₂ à C₄ aliphatique comportant au moins deux groupes hydroxyles alcooliques (polyol A) ou d'un éther portant au moins deux groupes hydroxyles alcooliques, construit à partir de 2 à 10 unités dérivées du polyol A.

2. Mélanges de résines selon la revendication 1, contenant, comme composant (a), une résine urée-formaldéhyde constituée
(a1) d'urée et
(a2) de 0,5 à 2,5 moles de formaldéhyde par mole d'urée.

3. Mélanges de résines selon la revendication 1 ou 2, contenant comme composant (a) une résine urée-formaldéhyde, qui présente, par rapport à une solution aqueuse à 60 % en poids, une viscosité de 30 à 100 mPa.s.

4. Mélanges de résines selon les revendications 1 à 4, contenant comme composant (d), de la glycérine ou un composé de formule générale I 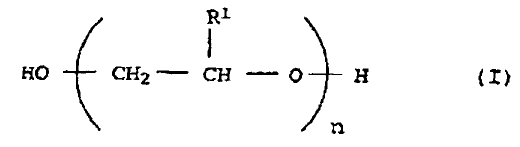 dans laquelle :
R¹ est hydrogène ou méthyle et
n est 1 à 10.

5. Solutions aqueuses contenant 15 à 60 % en poids des mélanges de résines selon les revendications 1 à 4.

6. Procédé pour la fabrication de produits plats liés à base de fibres, **caractérisé en ce que** l'on imprègne un produit plat à base de fibres avec la solution aqueuse selon la revendication 5 et **en ce que** l'on élimine ensuite l'eau.

7. Procédé selon la revendication 6, **caractérisé en ce qu'**il s'agit d'un produit plat constitué de fibres de verre, de fibres minérales, de fibres de polyester, de fibres céramiques ou de fibres de cellulose.

8. Procédé selon la revendication 6 ou 7, **caractérisé en ce que** l'on imprègne le produit plat à base de fibres avec une quantité de la solution aqueuse selon la revendication 5, telle que la teneur en matière solide du produit plat lié à base de fibres, par rapport au produit plat à base de fibres avant l'imprégnation, est augmentée de 10 à 30 %.

9. Produits plats liés à base de fibres, que l'on peut obtenir selon les revendications 6 à 8.

10. Utilisation de produits plats à base de fibres selon la revendication 9 comme garnissage intérieur dans des panneaux de toiture et des revêtements de sol bitumés, comme matière pour filtres ou comme séparateurs de batteries.
